# EUROPÄISCHE PATENTSCHRIFT

(11) **EP 2 872 021 B1**
(45) Veröffentlichungstag und Bekanntmachung des Hinweises auf die Patenterteilung: **13.09.2017**
(21) Anmeldenummer: 13736871.8
(22) Anmeldetag: 08.07.2013
(51) Int. Cl.: A47K 11/10, A01N 25/34, A46B 9/00, B08B 1/00, C11D 3/48, B29C 45/00, B29K 105/00, B29K 105/16, B29L 31/42

(54) **REINIGUNGSGERÄT**
CLEANING IMPLEMENT
APPAREIL DE NETTOYAGE

(30) Priorität: 10.07.2012 DE 102012106164
(43) Veröffentlichungstag der Anmeldung: 20.05.2015
(73) Patentinhaber: Brenner, Thorsten, 74858 Aglasterhausen (DE)
(72) Erfinder: Brenner, Thorsten, 74858 Aglasterhausen (DE)
(74) Vertreter: Witte, Weller & Partner Patentanwälte mbB
(86) Internationale Anmeldenummer: PCT/EP2013/064382
(87) Internationale Veröffentlichungsnummer: WO 2014/009313

(56) Entgegenhaltungen:
- DE-U1-202007 002 843
- GB-A- 2 484 330
- US-A- 6 108 847
- US-A1- 2007 143 912

## Beschreibung

Die Erfindung betrifft ein Reinigungsgerät, insbesondere ein WC-Reinigungsgerät, mit einem Stiel mit einem Griffabschnitt und mit einem Reinigungskörper, der an einem dem Griffabschnitt abgewandten Ende des Stiels angebracht ist.

Reinigungsgeräte für Sanitäranlagen sind allgemein bekannt. Dabei kann es sich insbesondere um Reinigungshandgeräte handeln, etwa um sog. WC-Bürsten. Üblicherweise weisen handgeführte WC-Bürsten einen länglichen Stiel auf, der an einem Ende von einem Benutzer ergriffen werden kann. Am anderen Ende des Stiels kann beispielhaft ein Borstenkopf angeordnet sein, der eine Vielzahl von Reinigungsborsten aufweist. Mit Hilfe des Borstenkopfes können Ablagerungen ggf. unter Zuhilfenahme von Wasser oder Reinigungsmittel gelöst werden, um etwa ein WC oder eine Toilette, insbesondere ein Spülbecken eines WCs, zu reinigen.

Aus der AT 139 246 B sind Zahnbürsten und Kopfbürsten mit keimtötend wirkenden Borsten bekannt. Die Borsten können etwa aus Silberdraht oder aus einem Draht bestehen, der mit einer Silberverbindung beschichtet ist.

Aus der DE 20 2012 000 394 U1 sind WC-Toilettenbürsten und Pisoirbürsten bekannt, die einen Bürstenkörper aus einem Kunststoffspritzteil aufweisen, wobei ferner Nylonborsten vorgesehen sind, die mit Silberpartikeln bestückbar sind.

Die DE 20 2007 002 843 U1 zeigt ein Reinigungsgerät gemäss dem Oberbegriff des Anspruchs 1, und offenbart insbesondere ein Gerät zum Säubern von glatten Oberflächen, das einen Griff und einen Reinigungskopf aufweist, der aus einer oder mehreren parallel zum Griff bzw. parallel zur Reinigungsfläche angebrachten Reinigungszungen besteht. Der Reinigungskopf kann mit Silberionen und/oder Teflon dotiert sein.

Die WO 2007/012210 A2 offenbart einen Reiniger mit einer Einweg-Wischtasche, wobei der Reiniger einer Halter umfasst, der ein Griffteil aufweist, wobei ferner ein Wischkörper und lösbar befestigbare Einweg-Wischtaschen vorgesehen sind.

Aus der GB 2484330 A ist ein Reinigungsgerät für eine Toilette bekannt, das einen Griffabschnitt und einen Reinigungsabschnitt aufweist, wobei zumindest ein Teil des Reinigungsabschnitts einen Werkstoff aufweist, der Antihafteigenschaften aufweist.

Aus der US 6,108,847 A ist eine Bürste mit antimikrobiellen Eigenschaften bekannt, die einen Stiel aufweist, wobei der Stiel aus einem Kunststoff besteht, dem ein antimikrobieller Wirkstoff beigefügt ist, und wobei eine Wanderung des antimikrobiellen Wirkstoffs aus dem Stiel in Borsten der Bürste beabsichtigt ist.

Aus der US 2007/0143912 A1 ist ein Abflussreinigungsgerät bekannt, das in eine Aufbewahrungshülse einführbar ist, wobei die Aufbewahrungshülse aus einem mit einem antibakteriellen Mittel versehenen Kunststoff gefertigt ist.

Ferner sind im Stand der Technik sog. "borstenlose" WC-Reinigungsgeräte bekannt. Beispielhaft zeigt die DE 20 2005 011 730 U1 eine borstenlose WC-Bürste, die aus einem Stiel und einem eine Mehrzahl von Einzelflächen aufweisenden Reinigungsflächenbereich besteht. Insbesondere kann das bekannte borstenlose WC-Reinigungsgerät einen Reinigungsflächenbereich aufweisen, der sternförmig angeordnete Reinigungsflächen umfasst. Die Reinigungsflächen können insbesondere lamellenartig angeordnet sein. Der Reinigungsflächenbereich weist insgesamt eine Kontur auf, die beispielhaft einer Kontur eines üblichen Borstenkopfes nachempfunden ist, die allgemein durch die Lage, Orientierung und Länge der einzelnen Borsten definiert ist.

Übliche Reinigungsgeräte weisen hinreichend bekannte Reinigungseigenschaften bzw. Reinigungswirkungen auf. Allgemein ist die Reinigungswirkung von bekannten Reinigungsgeräten für WC- bzw. Toilettenspülbecken bei der Zuhilfenahme von Wasser (Wasserspülung), ggf. unter Hinzufügung von biologischen oder chemischen Reinigungsmitteln, als ausreichend zu betrachten. Dies trifft insbesondere auf bekannte WC-Bürsten zu. Abgewandelte Ausführungen, bspw. die in der DE 20 2005 011 730 U1 vorgestellte "borstenlose" WC-Bürste, setzen sich das Ziel, die Reinigungswirkung und insbesondere die Gebrauchseigenschaften der Reinigungsgeräte zu optimieren.

Vor diesem Hintergrund liegt der Erfindung die Aufgabe zugrunde, ein Reinigungsgerät, insbesondere ein WC-Reinigungsgerät, anzugeben, das bei einfachem Aufbau möglichst unter Beibehaltung der Reinigungswirkung eine weiter verbesserte Handhabung ermöglicht, sich insbesondere für einen längeren Gebrauch eignen kann und möglichst auch nach längerem Gebrauch einen ästhetisch ansprechenden äußeren Zustand aufweist.

Diese Aufgabe wird durch ein Reinigungsgerät, insbesondere ein WC-Reinigungsgerät, gemäss Anspruch 1 gelöst.

Die Aufgabe der Erfindung wird auf diese Weise vollkommen gelöst.

Erfindungsgemäß kann nämlich die antimikrobiell wirksame Substanz dazu beitragen, eine Verschmutzung oder einen mikrobiellen Befall des Reinigungsgeräts zu verringern oder gar vollständig oder zumindest nahezu vollständig zu vermeiden. Die mit dem Reinigungsgerät zu reinigenden Reinigungsobjekte, insbesondere Spülbecken, weisen regelmäßig einen hohen Wasserdurchsatz auf, so dass sich dort im Zeitablauf bei hinreichend häufiger Reinigung kaum bleibende oberflächliche Verschmutzungen oder Ablagerungen einstellen.

Demgegenüber ist es üblich, die bei der Reinigung der Reinigungsobjekte genutzten Reinigungsgeräte, insbesondere WC-Reinigungsgeräte, zwischen einzelnen Reinigungsvorgängen in geeigneten Aufnahmen oder Halterungen aufzunehmen und aufzubewahren. Bei den Aufnahmen kann es sich etwa um topfartige, taschenartige, napfförmige oder ähnlich gestaltete Körper handeln. Üblicherweise werden die Reinigungsgeräte mit dem Reinigungskörper voran in den Aufnahmen abgelegt. Da etwa die Reinigung eines Spülbeckens mit dem Reinigungsgerät grundsätzlich nass erfolgt, also unter Zuhilfenahme von Wasser, weist das Reinigungsgerät regelmäßig zumindest im Bereich des Reinigungskörpers nach der Reinigung eine Restfeuchte auf. Auch wenn etwa die WC-Bürste der oben genannten DE 20 2005 011 730 U1 bereits dazu ausgebildet sein soll, möglichst wenig Flüssigkeit anhaften zu lassen, muss allgemein damit gerechnet werden, dass es schlichtweg unmöglich ist, das Reinigungsgerät nach dem Reinigungsvorgang und vor dem Aufbewahren vollständig trocknen zu können.

Dies kann zur Folge haben, dass insbesondere der Reinigungskörper noch feucht in die Aufnahme eingeführt wird, um das Reinigungsgerät aufbewahren zu können. Im Laufe der Zeit kann sich somit in der Aufnahme für das Reinigungsgerät eine beträchtliche Flüssigkeitsmenge ansammeln, die mikrobiell kontaminiert sein kann. Es muss allgemein damit gerechnet werden, dass insbesondere WC-Spülbecken aus mikrobieller Sicht niemals vollständig und restlos gereinigt werden können.

Folglich kann sich in der der Aufbewahrung oder Halterung des Reinigungsgerätes dienenden Aufnahme eine hochgradig mikrobiell verschmutzte Umgebung ergeben. Dies kann im Zeitablauf etwa dazu führen, dass sich am Reinigungsgerät, insbesondere an dessen Reinigungskörper, Ablagerungen bilden können, die einen unästhetischen Eindruck hervorrufen können. Auch aus medizinischer oder hygienischer Sicht ist ein lang anhaltendes mikrobielles Wachstum in der Aufnahme für das Reinigungsgerät oder am Reinigungsgerät selbst nachteilig und kann ein potentielles Infektionsrisiko erhöhen. Dies gilt insbesondere unter Berücksichtigung der Tatsache, dass die Reinigungsgeräte allgemein ein Vielfaches länger in der Aufnahme aufbewahrt sind, als sie tatsächlich zur Reinigung genutzt werden.

Die antimikrobiell wirksame Substanz kann hingegen dazu beitragen, dass mikrobielle Ablagerungen am Reinigungsgerät in ihrem Wachstum gehindert oder sogar abgetötet werden können.

Somit kann das Reinigungsgerät über längere Zeit in Benutzung sein und auch in der Aufnahme verbleiben, ohne aus ästhetischer Sicht "alt" oder gar "verschmutzt" zu wirken. Gleichzeitig kann sich ein potentielles Infektionsrisiko, das grundsätzlich mit mikrobiellen Belastungen einhergehen kann, beträchtlich verringern. Mikrobiell befallene Reinigungsgeräte können insbesondere im befeuchteten Zustand unangenehme Gerüche aufweisen. Auch derartige zusätzliche Belastungen können mittels der antimikrobiell wirksamen Substanz verringert oder gänzlich vermieden werden.

Unter dem Begriff "antimikrobiell wirksame Substanz" können grundsätzlich Substanzen zu verstehen sein, die die Vermehrungsfähigkeit von Mikroorganismen beeinträchtigen. Hierzu kann eine Reduzierung der Vermehrungsfähigkeit gehören. Eine antimikrobiell wirksame Substanz kann jedoch auch dazu ausgebildet sein, die Vermehrung von Mikroorganismen vollständig oder nahezu vollständig zu unterbinden. Es ist ferner vorstellbar, dass die antimikrobiell wirksame Substanz Mikroorganismen direkt tötet. Antimikrobiell wirksame Substanzen können beispielhaft gegen Bakterien, gegen Pilze, gegen Hefen bzw. gegen sonstige Mikroorganismen gerichtet sein.

Bei dem Reinigungsgerät kann es sich um ein Handgerät zur Reinigung von Toiletten handeln, das grundsätzlich ohne Borsten auskommt. Insofern kann das Reinigungsgerät auch als borstenloses Reinigungsgerät bezeichnet werden. Gleichwohl kann die Mehrzahl von an der Oberfläche des Reinigungskörpers ausgebildeten Reinigungselementen eine hinreichend griffige Kontur bereitstellen, die auch das Entfernen von festsitzenden Verschmutzungen erlaubt.

Die borstenlose Gestaltung des Reinigungsgeräts kann zu einer Verringerung des Fertigungsaufwands führen. Ferner kann die borstenlose Gestaltung zumindest beim Reinigungskörper selbst grundsätzlich zu einer reduzierten Oberfläche führen, so dass insgesamt etwa nach einem Reinigungsvorgang, verglichen mit konventionellen WC-Bürsten, weniger (potentiell vorbelastete) Flüssigkeit am Reinigungskörper anhaften kann. Bereits durch diese Maßnahme kann eine mikrobielle Kontamination verringert werden.

Gemäß einer weiteren Ausgestaltung ist die antimikrobiell wirksame Substanz einem Trägermaterial des Reinigungsgerätes beigemischt oder als Bestanteil einer Beschichtung auf das Trägermaterial aufgebracht.

Es ist grundsätzlich denkbar, die antimikrobiell wirksame Substanz in eine Struktur des Trägermaterials einzubinden, wobei etwa beim Kontakt mit Wasser ein Lösen der antimikrobiell wirksamen Substanz aus dem Trägermaterial erfolgen kann. Auf diese Weise kann das Trägermaterial selbst ein Reservoir der antimikrobiell wirksamen Substanz aufweisen und diese über einen längeren Zeitraum abgeben. Eine Beimischung der antimikrobiell wirksamen Substanz zum Trägermaterial kann den weiteren Vorteil mit sich bringen, dass bereits das mit der antimikrobiell wirksamen Substanz vermischte Trägermaterial verarbeitet werden kann, etwa mittels Spritzgießen.

Alternativ dazu kann die antimikrobiell wirksame Substanz ebenso jedoch auch als Bestandteil einer Beschichtung auf das Trägermaterial aufgebracht werden, insbesondere nach dessen Formgebung.

Es versteht sich, dass der Stiel und der Reinigungskörper grundsätzlich zumindest im Wesentlichen aus demselben Trägermaterial bestehen können. Es versteht sich jedoch ebenso, dass gemäß einer alternativen Ausgestaltung etwa der Stiel aus einem ersten Trägermaterial und der Reinigungskörper im Wesentlichen aus einem zweiten Trägermaterial bestehen kann. Die antimikrobiell wirksame Substanz kann zumindest dem ersten Trägermaterial oder dem Trägermaterial beigemischt sein oder mittels einer Beschichtung darauf aufgebracht sein.

Es versteht sich ferner, dass der Stiel und der Reinigungskörper im Wesentlichen mit der gleichen antimikrobiell wirksamen Substanz versehen sein können. Gleichfalls ist es vorstellbar, für den Stiel und den Reinigungskörper jeweils geeignete antimikrobiell wirksame Substanzen auszuwählen, die sich voneinander unterscheiden.

Gemäß einer weiteren Ausgestaltung ist der Reinigungskörper aus einem elastischen Kunststoff gebildet, wobei die antimikrobiell wirksame Substanz dem Kunststoff beigemischt ist.

Vorzugsweise weist der Reinigungskörper eine gewisse Eigenelastizität auf, die etwa durch Werkstoffkennwerte des Kunststoffes bedingt ist oder durch eine geeignete geometrische Ausgestaltung bewirkt werden kann. Auf diese Weise kann der Reinigungskörper hinreichend flexibel sein, auch wenn das Reinigungsgerät auf einen Borstenkopf verzichtet. Der Reinigungskörper kann etwa in einfacher Weise mittels Spritzgießen gefertigt sein. Die Mehrzahl von Reinigungselementen kann als integraler Bestandteil des Reinigungskörpers im Zuge des Spritzgussvorgangs ausgebildet werden.

Gemäß einer Weiterbildung ist der Stiel aus einem Kunststoff gebildet und mit einer antimikrobiell wirksamen Substanz versehen, wobei die antimikrobiell wirksame Substanz zumindest partiell dem Kunststoff beigemischt oder als Bestandteil einer Beschichtung auf den Kunststoff appliziert ist.

Es versteht sich, dass der Stiel und der Reinigungskörper verschiedene Kunststoffe (Trägermaterialien) aufweisen können. Der Stiel und der Reinigungskörper können jedoch auch aus dem gleichen Kunststoff bestehen.

Die zumindest partielle Beimischung oder Beschichtung der antimikrobiell wirksamen Substanz kann dazu beitragen, dass auch der Stiel vor übermäßiger mikrobieller Kontamination geschützt wird. Vorrangig im Bereich des Stiels, insbesondere im Griffabschnitt, kommt der Benutzer mit dem Reinigungsgerät in Kontakt. Insofern kann die Gestaltung des Stiels mit der antimikrobiell wirksamen Substanz eine Übertragung von Mikroben auf den Benutzer hemmen oder gar verhindern.

In vorteilhafter Weiterbildung enthält die antimikrobiell wirksame Substanz silberhaltige Bestandteile, die insbesondere kolloidales Silber aufweisen und vorzugsweise zur Abgabe von Silberionen ausgebildet sind.

Silber kann in hohem Maße antimikrobiell wirksam sein. Insbesondere kolloidales Silber eignet sich zur Bekämpfung von mikrobieller Kontamination. Bei kolloidalem Silber kann es sich um feinste Partikel von Silber oder silberhaltigen Verbindungen handeln. Silber bzw. silberhaltige Verbindungen bzw. deren Ionen (Kationen) können in geeignete Werkstoffe eingelagert werden. Die Partikel können über längere Zeiträume freigegeben werden und ihre antimikrobielle Wirkung entfalten.

Weitere Metalle bzw. deren Ionen können antimikrobiell wirksam sein, bspw. Kupfer und verschiedene Kupferlegierungen. Gemäß einer weiteren Ausgestaltung ist es bevorzugt, dass die antimikrobiell wirksame Substanz kupferhaltige Bestandteile enthält, die vorzugsweise zur Abgabe von Kupferionen ausgebildet sind.

Es versteht sich, dass der silberenthaltenden antimikrobiell wirksamen Substanz weitere Bestandteile beigemengt sein können, bspw. Magnesium, Aluminium oder Zinkoxid.

Gemäß einer weiteren Ausgestaltung ist der Reinigungskörper zumindest abschnittsweise mit antimikrobiell wirksamen Viskosefasern versehen, insbesondere mit Viskosefasern auf Basis von Zellstoffen, die aus Bambus oder Buche gewonnen sind.

Gemäß einer weiteren Ausgestaltung enthält die antimikrobiell wirksame Substanz polychlorierte Phenoxyphenole.

Dabei kann es sich etwa um Triclosan handeln, welches antimikrobiell wirksam ist. Es versteht sich, dass die antimikrobiell wirksame Substanz durch weitere natürliche oder synthetische Stoffe oder Stoffverbindungen gebildet sein kann.

In vorteilhafter Weiterbildung ist die antimikrobiell wirksame Substanz in eine Trägermatrix eingebunden, die Zeolithe enthält.

Insbesondere Silberionen können in die Zeolithe eingebunden oder eingelagert sein. Auf diese Weise kann der Zeolith als Depot dienen und über einen längeren Zeitraum die antimikrobiell wirksame Substanz abgeben. Somit kann die antimikrobielle Wirkung des Reinigungsgeräts über einen langen Zeitraum erhalten bleiben.

In vorteilhafter Weiterbildung ist die antimikrobiell wirksame Substanz in kalziniertes synthetisches Zeolith eingebunden.

Gemäß einer weiteren Ausgestaltung besteht zumindest der Stiel oder der Reinigungskörper im Wesentlichen aus einem Polyolefinwerkstoff, insbesondere einem Polyethylen oder einem Polypropylen.

Es versteht sich, dass grundsätzlich auch andere geeignete plastische oder elastische Kunststoffe zur Verwendung kommen können. Ferner kann eine Faserverstärkung, insbesondere eine Glasfaserverstärkung, des Grundwerkstoffs denkbar sein. Ebenso ist es vorstellbar, geeignete Compounds zu verwenden.

Polyethylen oder Polypropylen sind hochverfügbar und können in einfacher Weise maschinell verarbeitet werden. Zwischenprodukte, insbesondere Granulate, können mit geringen Bestandteilen der antimikrobiellen Substanz durchmischt werden, ohne dass sich Verarbeitungseigenschaften wesentlich ändern. Somit eignen sich Polyethylen oder Polypropylen als geeigneter Trägerwerkstoff.

Es versteht sich, dass zumindest am Stiel oder am Reinigungskörper eine verschleißhemmende oder festigkeitssteigernde Beschichtung vorgesehen sein kann. Dabei kann es sich etwa um eine Beschichtung mit Polytetrafluorethylen (PTFE) handeln. Die Beschichtung kann ferner dazu beitragen, eine Oberflächenspannung auf dem Stiel oder dem Reinigungskörper zu verringern. Auch auf diese Weise kann die Flüssigkeitsmenge reduziert werden, die am Reinigungsgerät anhaften kann.

Gemäß einer alternativen Ausgestaltung besteht der Reinigungskörper zumindest abschnittsweise aus einem silikonartigen Trägermaterial, wobei die antimikrobiell wirksame Substanz vorzugsweise in das silikonartige Trägermaterial eingebunden ist.

In bevorzugter Weiterbildung weist der Reinigungskörper zumindest abschnittsweise eine borstenlose genoppte Oberfläche auf, die mit Reinigungselementen in Form von erhabenen Noppen versehen ist, die insbesondere in ihrer Erstreckungsrichtung einen runden Querschnitt aufweisen.

Die genoppte Gestaltung des Reinigungskörpers kann die Reinigungswirkung verbessern. Dies kann erfolgen, ohne dass sich die Oberfläche des Reinigungskörpers wesentlich vergrößert. Die Noppen können insbesondere halbkugelförmig, kugelabschnittsförmig oder ähnlich gestaltet sein. Die Noppen können sich grundsätzlich normal (senkrecht) zur Oberfläche des Reinigungskörpers erstrecken. Die Noppen können in geeigneter Weise mit der Oberfläche des Reinigungskörpers verrundet sein, um Flüssigkeiten wenig Möglichkeiten zum Anhaften zu erlauben. Es versteht sich, dass es sich bei den Noppen um integrale Bestandteile des Reinigungskörpers handeln kann. Die Noppen können zueinander beabstandet auf der Oberfläche des Reinigungskörpers ausgebildet sein. Die Noppen können jedoch auch etwa derart angeordnet sein, dass sich benachbarte Noppen berühren oder zumindest teilweise ineinander übergehen.

Gemäß einer weiteren Ausgestaltung weist der Reinigungskörper an seiner Oberfläche eine strukturierte Anordnung von Reinigungselementen auf, die insbesondere gereiht oder versetzt zueinander angeordnet sind.

Bei den Reinigungselementen kann es sich insbesondere um die Noppen handeln. Der Reinigungskörper kann zumindest in den Bereichen mit den Reinigungselementen oder Noppen versehen sein, die beim Reinigungsvorgang das Reinigungsobjekt direkt kontaktieren können.

Gemäß einer weiteren Ausgestaltung weist der Reinigungskörper einen zungenartigen Grundkörper auf, der sich ausgehend von einer mit dem Stiel gekoppelten Basis erstreckt, wobei der Grundkörper eine Haupterstreckungsrichtung aufweist, die im Wesentlichen mit einer Haupterstreckungsrichtung des Stiels zusammenfällt.

Auf diese Weise kann sich eine günstige Handhabung und eine gute Reinigungswirkung ergeben. Es ist ebenso vorstellbar, dass die Haupterstreckungsrichtung des Grundkörpers gegenüber der Haupterstreckungsrichtung des Stiels geneigt ist und diese bspw. einen spitzen Winkel zueinander aufweisen. Ebenso ist es vorstellbar, dass alternativ oder zusätzlich bereits der Stiel eine Biegung, Kröpfung oder allgemein einen gekrümmten Verlauf aufweisen kann.

Der Grundkörper kann bspw. schnabelartig oder becherförmig gestaltet sein. Auf diese Weise können auch Engstellen erreicht und gereinigt werden.

Gemäß einer weiteren Ausgestaltung weist der Reinigungskörper einen Grundkörper mit im Wesentlichen halbellipsoidförmiger Gestaltung auf.

Es versteht sich, dass der Reinigungskörper allgemein in Form eines EIlipsoidabschnitts gestaltet sein kann. Beispielhaft kann der Grundkörper eine Gestaltung aufweisen, die einem quer zu seiner längsten Hauptachse geschnittenen Ellipsoid entspricht. Bei dem zugrundeliegenden (gedachten) Ellipsoid kann es sich insbesondere um einen Ellipsoid handeln, der in Richtung einer seiner Hauptachsen, die quer zur längsten Hauptachse angeordnet sind, abgeflacht oder abgeplattet ist. Auch auf diese Weise kann sich die zungenartige oder schnabelartige Gestaltung ergeben. In einer alternativen Gestaltung kann der Grundkörper einen Querschnitt aufweisen, der etwa mandelförmig oder augenförmig ausgebildet ist. Mit anderen Worten kann es sich um einen grundsätzlich elliptischen oder ovalen Querschnitt handeln, der jedoch an seinen durch die größte Hauptachse verbundenen Enden spitz oder nahezu spitz ausläuft.

In bevorzugter Ausgestaltung weist der Reinigungskörper zumindest einen Hohlraum auf, der durch zumindest einen Wandabschnitt begrenzt ist.

Auf diese Weise kann der Reinigungskörper eine erhöhte Elastizität aufweisen und etwa beim Reinigungsvorgang leicht verformbar sein, um sämtliche zu reinigenden Flächen des Reinigungsobjekts erreichen zu können.

Es versteht sich, dass es sich bei dem Hohlraum nicht um einen hermetisch nach außen abgeschlossenen Hohlraum handeln muss. Vielmehr kann es sich bei dem Hohlraum um eine gezielte Materialschwächung oder Wandstärkenschwächung handeln, die dem Reinigungskörper insgesamt zu erhöhter Flexibilität verhelfen kann.

Es ist ferner vorstellbar, dass der Reinigungskörper als geschlossener Hohlkörper ausgebildet ist und eine Wandstärke im Bereich von etwa 0,5 mm bis 2,5 mm, vorzugsweise von etwa 0,8 mm bis 1,6 mm aufweist. Auch bei dieser Ausgestaltung muss es sich bei dem geschlossenen Hohlkörper nicht um einen hermetisch nach außen abgedichteten Hohlkörper handeln.

Gemäß einer weiteren Ausgestaltung sind der Stiel und der Reinigungskörper formschlüssig miteinander gekoppelt.

Auf diese Weise kann sich ein fester Verbund zwischen dem Stiel und dem Reinigungskörper ergeben, ohne dass separate Befestigungselemente erforderlich sind. Die Verbindung zwischen dem Stiel und dem Reinigungskörper kann beispielhaft mittels Hinterspritzen erfolgen. Dabei kann etwa zunächst eine der beiden Komponenten gefertigt werden, etwa unter Ausbildung geeigneter Formschlusskonturen. Die bereits gefertigte Komponente kann beispielhaft als Insert bei der Fertigung der zweiten Komponente dienen. Durch eine geeignete Formschlusskontur kann die zweite Komponente hinterschnittig an der ersten Komponente aufgenommen werden. Die formschlüssige Kopplung lässt sich jedoch auch durch eine geeignete Montage bereits gefertigter Komponenten bewirken, etwa durch Schnapphaken oder Ähnliches. Es kann allgemein auch eine vorhandene Bauteilelastizität genutzt werden, um die Komponenten formschlüssig zu verbinden.

Das WC-Reinigungsgerät kann gemäß weiterer vorteilhafter Aspekte gestaltet sein. Es ist vorstellbar, dass die antimikrobiell wirksame Substanz kupferhaltige Bestandteile enthält und insbesondere zur Abgabe von Kupferionen ausgebildet ist. Gemäß einer weiteren alternativen Ausgestaltung weist die antimikrobiell wirksame Substanz sowohl silberhaltige Bestandteile als auch kupferhaltige Bestandteile auf und ist vorzugsweise dazu ausgebildet, Silberionen und Kupferionen abzugeben.

Die antimikrobiell wirksame Substanz kann ferner Viskosefasern oder Granulat aus Viskose enthalten. Insbesondere können die Viskosefasern aus Zellstoff hergestellt werden, der vorzugsweise auf Bambusholz oder Buchenholz zurückgeht. Auf Bambus oder Buche basierende Viskosefasern können antimikrobiell, insbesondere antibakteriell wirksam sein. Die Viskosefasern können zusätzlich mit antimikrobiell wirksamen Stoffen versehen sein, etwa mit Silberpartikeln und/oder mit Kupferpartikeln. Somit können die Viskosefasern etwa auch als Träger für antimikrobiell wirksame Nanopartikel fungieren.

Es ist besonders bevorzugt, wenn auch der Stiel des Reinigungsgeräts zumindest abschnittsweise mit der antimikrobiell wirksamen Substanz versehen ist. Vorzugsweise ist auch beim Stiel die antimikrobiell wirksame Substanz in eine Trägermatrix eingebunden, die Zeolithe enthält.

In vorteilhafter Weise ist das Reinigungsgerät derart flexibel ausgebildet, dass die Reinigung von Urinalen ermöglicht ist. Dies kann einerseits dadurch bewirkt werden, dass der Reinigungskörper selbst zumindest abschnittsweise hinreichend flexibel und deformierbar gestaltet ist. Es versteht sich, dass der Reinigungskörper gleichwohl eine genügend hohe Elastizität aufweisen kann, um nach einer Entlastung wieder seine ursprüngliche Form annehmen zu können. Es ist jedoch auch vorstellbar, eine Koppelstelle zwischen dem Stiel und dem Reinigungskörper derart auszubilden, dass der gesamte Reinigungskörper, oder zumindest wesentliche Abschnitte des Reinigungskörpers, relativ zum Stiel verschwenkbar sind. Dies kann selbstverständlich mit einer erhöhten Deformierbarkeit des Reinigungskörpers selbst einhergehen. Auf diese Weise kann das Reinigen von Toilettenschüsseln und Urinalen auch unter dem Rand weiter vereinfacht werden.

Ein weiterer Vorteil verschiedener der vorstehend beschriebenen Ausgestaltungen besteht darin, dass neben einer antimikrobiellen Wirkung auch eine Reduzierung bzw. Hemmung unerwünschter Gerüche auftritt. Dies kann insbesondere die Entstehung übermäßiger Geruchsbelastungen verzögern bzw. gänzlich vermeiden, wenn das Reinigungsgerät über längere Zeit in einer Aufbewahrung, etwa einer Aufnahme, aufbewahrt wird.

Bei einer weiteren bevorzugten Ausgestaltung des Reinigungsgeräts besteht der Reinigungskörper zumindest abschnittsweise, vorzugsweise vollständig, aus einem silikonartigen Trägermaterial, wobei die antimikrobiell wirksame Substanz in das silikonartige Trägermaterial eingebettet ist. Bei der antimikrobiell wirksamen Substanz kann es sich insbesondere etwa um silberhaltige Bestandteile, zur Abgabe von Silberionen ausgebildete Bestandteile, kupferhaltige Bestandteile und/oder zur Abgabe von Kupferionen ausgebildete Bestandteile handeln. Beispielhaft kann ein Silikonwerkstoff, aus dem der Reinigungskörper zumindest abschnittsweise gebildet ist, Fasern mit Silberbestandteilen und/oder Kupferbestandteilen aufweisen.

Gemäß einer weiteren bevorzugten Ausgestaltung des Reinigungsgeräts weist der Reinigungskörper einen zungenartigen Grundkörper auf, der insbesondere in einer Haupterstreckungsrichtung des Stiels an seiner dem Stiel abgewandten Seite spitz ausläuft, wobei am Grundkörper, insbesondere in einer Ebene des Grundkörpers, die mit einer Haupterstreckungsrichtung des Grundkörpers sowie einem Bereich einer maximalen Breite des Grundkörpers zusammenfällt, zumindest ein flügelartiger Fortsatz ausgebildet ist, der im Wesentlichen flacher als der Grundkörper selbst ausgebildet ist. Auch der zumindest eine flügelartige Fortsatz kann mit erhabenen Reinigungselementen gemäß einem der vorgenannten Aspekte ausgestaltet sein. Der flügelartige Fortsatz kann eine höhere Flexibilität als der Grundkörper des Reinigungskörpers aufweisen und somit noch einfacher in enge oder gekrümmte Bereiche eines zu reinigenden Gegenstands eingeführt werden. Der Grundkörper kann dem flügelartigen Fortsatz jedoch eine hinreichende Elastizität bzw. Steifigkeit verleihen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteil der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht eines Reinigungsgeräts;
- Fig. 2: eine vergrößerte Detaildarstellung des Reinigungsgeräts gemäß Fig. 1;
- Fig. 3: eine gebrochene Darstellung eines weiteren Reinigungsgeräts in geneigter Ansicht;
- Fig. 4: eine seitliche Ansicht des Reinigungsgeräts gemäß Fig. 3;
- Fig. 5: eine Draufsicht des Reinigungsgeräts gemäß Fig. 3;
- Fig. 6: eine teilweise geschnittene Seitenansicht eines gegenüber der Darstellung in Fig. 3 abgewandelten Reinigungsgeräts;
- Fig. 7: eine Teilschnittansicht eines Reinigungsobjekts; und
- Fig. 8: eine Teilschnittansicht eines weiteren, gegenüber der Darstellung in Fig. 6 abgewandelten Reinigungsgeräts.

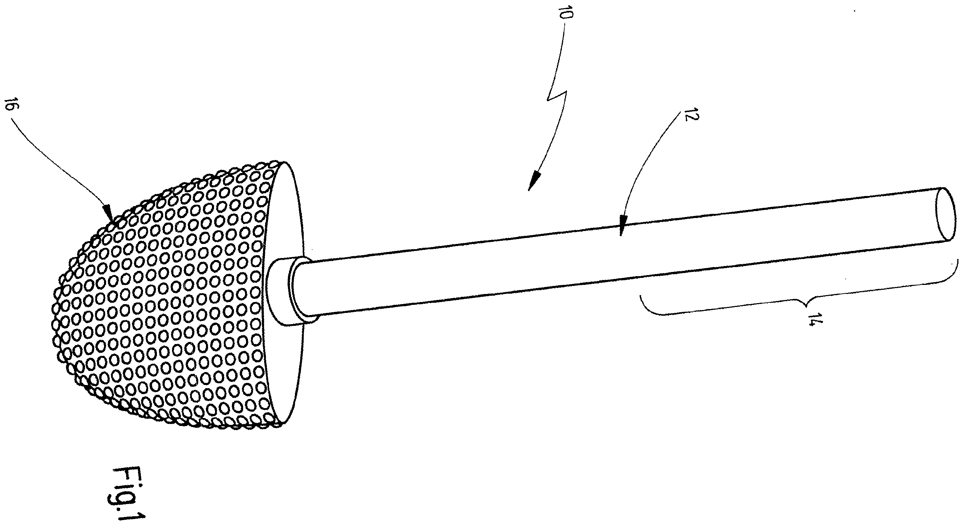

In Fig. 1 ist ein Reinigungsgerät perspektivisch dargestellt und insgesamt mit 10 bezeichnet.

Bei dem Reinigungsgerät 10 kann es sich insbesondere um ein WC-Reinigungsgerät oder ein Toilettenreinigungsgerät handeln, das zur Reinigung von Spülbecken von Sanitäranlagen, insbesondere von Toilettenschüsseln, ausgebildet ist. WC-Spülbecken können in geeigneter Weise mit Spülkästen kombiniert werden, um einen für Reinigungsvorgänge angepassten Wasserdurchsatz bereitstellen zu können. Bekannte Spülbecken weisen Gestaltungen und Abmessungen auf, die dem Fachmann geläufig sind. Insbesondere hat sich am Markt eine Bandbreite üblicher Standardabmessungen herausgebildet, an die Reinigungsgeräte oder Reinigungsbürsten angepasst sind.

Das Reinigungsgerät 10 weist einen Stiel 12 auf, der mit einem Griffabschnitt 14 versehen ist. An seinem dem Griffabschnitt 14 abgewandten Ende ist der Stiel 12 mit einem Reinigungskörper 16 verbunden.

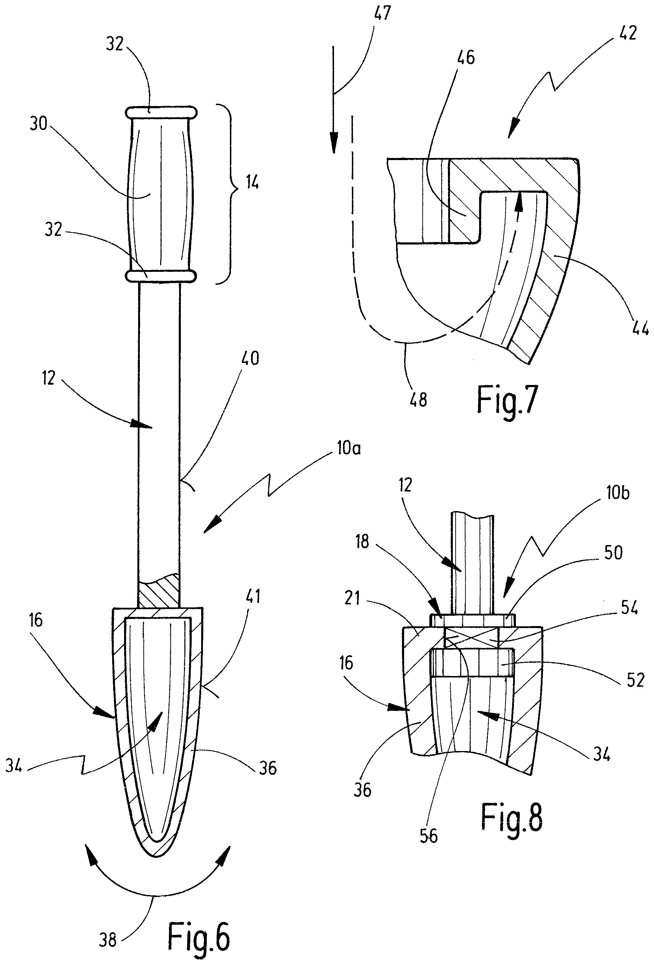

Bei dem Griffabschnitt 14 kann es sich grundsätzlich um einen integralen Bestandteil des Stiels 12 handeln. Der Griffabschnitt 14 kann einerseits lediglich einen Endbereich des Stiels 12 umfassen, in dem ein Benutzer das Reinigungsgerät 10 üblicherweise ergreift. Der Griffabschnitt 14 kann ferner auch Gestaltelemente umfassen, die eine Führung und Handhabung des Reinigungsgeräts 10 vereinfachen, vgl. auch Fig. 6.

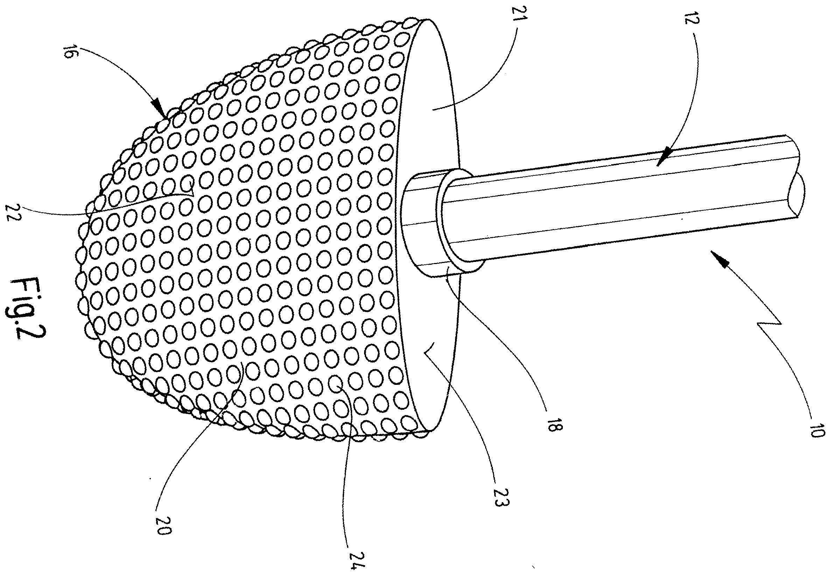

Fig. 2 zeigt eine vergrößerte Teilansicht des Reinigungsgeräts 10 gemäß Fig. 1. Beispielhaft kann sich der Reinigungskörper 16 an einen Befestigungsabschnitt 18 anschließen. Der Reinigungskörper 16 kann einen Grundkörper 20 umfassen, der sich an eine Basis 21 anschließt. Im Bereich der Basis 21 kann am Reinigungskörper 16 eine Rückfläche 23 ausgebildet sein. Der Grundkörper 20 kann mit einer Oberfläche 22 versehen sein.

An der Oberfläche 22 des Grundkörpers 20 kann eine Mehrzahl oder Vielzahl von Reinigungselementen 24 ausgebildet sein. Die Reinigungselemente 24 können insbesondere integrale Bestandteile des Reinigungskörpers 16 bzw. von dessen Grundkörper 20 sein. Bei den Reinigungselementen 24 kann es sich insbesondere um noppenförmige Erhebungen handeln. Die noppenförmigen Erhebungen können grundsätzlich gleichmäßig oder ungleichmäßig über Teilbereiche der Oberfläche 22 oder über die gesamte Oberfläche 22 verteilt sein. Beispielhaft können die Reinigungselemente 24 gereiht sein, etwa in Reihen und Spalten angeordnet. Die Reihen und Spalten der Reinigungselemente 24 können zueinander ausgerichtet sein. Ebenso ist auch eine Gestaltung denkbar, bei denen die Reinigungselemente 24 in zueinander versetzten Reihen und Spalten angeordnet sind. Die Reinigungselemente 24 können willkürlich oder geordnet an der Oberfläche 22 des Grundkörpers 20 ausgebildet sein. Es ist vorstellbar, die Rückfläche 23 der Basis 21 ohne Reinigungselemente 24 auszuführen. Entgegen der in Fig. 2 gezeigten Darstellung ist es jedoch auch vorstellbar, ebenso auf der Rückfläche 23 Reinigungselemente 24 auszubilden, bspw. Noppen oder Ähnliches.

Die noppenförmigen Reinigungselemente 24 können etwa als Halbkugeln, Kugelabschnitte oder Ähnliches gestaltet sein. Jedes der Reinigungselemente 24 kann in seiner Erstreckung normal (senkrecht) zur Oberfläche 22 grundsätzlich einen runden Querschnitt aufweisen. Andere Querschnitte sind denkbar, bspw. ovale Querschnitte, eckige Querschnitte oder Ähnliches.

Entgegen der in Fig. 2 gezeigten Darstellung können die Reinigungselemente 24 mit der Oberfläche 22 verrundet sein und weiche Übergänge aufweisen. Die noppenförmigen Reinigungselemente 24 können die Reinigungswirkung des Reinigungsgeräts 10 verbessern, ohne dass sich eine wirksame Außenfläche des Reinigungskörpers 16 übermäßig vergrößert, an der grundsätzlich Flüssigkeit anhaften kann.

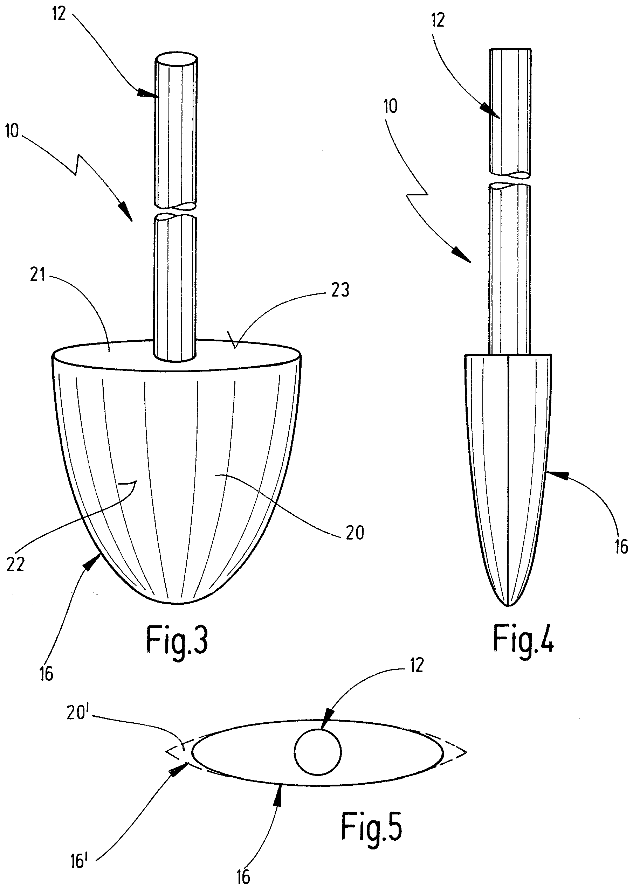

In den Figuren 3, 4 und 5 sind weitere Ansichten eines Reinigungsgeräts 10 dargestellt, das grundsätzlich dem Reinigungsgerät 10 gemäß der Figuren 1 und 2 entsprechen kann. In den Figuren 3 und 4 ist der Stiel 12 des Reinigungsgeräts 10 jeweils gebrochen dargestellt. In den Figuren 3, 4 und 5 wurde auf eine zeichnerische Darstellung der Reinigungselemente 24 an der Oberfläche 22 des Reinigungskörpers 16 aus Veranschaulichungsgründen verzichtet. Gleichwohl ist es bevorzugt, wenn auch die Oberfläche 22 des in den Figuren 3, 4 und 5 gezeigten Reinigungsgeräts 10 mit den Reinigungselementen 24 versehen ist.

Der Grundkörper 20 des Reinigungskörpers 16 kann etwa in Form eines Halbellipsoids oder eines Ellipsoidabschnitts gestaltet sein. Eine (gedachte) größte Hauptachse des Ellipsoids kann mit einer Längsachse des Stiels 12 zusammenfassen. Die Hauptachse und die Längsachse können alternativ auch unter einem geringen Winkel zueinander geneigt sein. Auf diese Weise kann etwa eine leichte Schrägstellung des Reinigungskörpers 16 relativ zum Stiel 12 bewirkt werden. Der der Gestaltung des Grundkörpers 20 des Reinigungskörpers 16 zugrundeliegende Ellipsoid kann neben seiner längsten Hauptachse zwei weitere Hauptachsen aufweisen, die insbesondere verschiedenen Längen haben können. Auf diese Weise kann das zugrundeliegende Ellipsoid als abgeflachter bzw. abgeplatteter Ellipsoid mit einer nicht rotationssymmetrischen Gestaltung ausgebildet sein, vgl. insbesondere die in Fig. 5 gezeigte Draufsicht auf das Reinigungsgerät 10.

Es ist jedoch auch vorstellbar, den Grundkörper 20 des Reinigungskörpers 16 mit einem mandelförmigen Querschnitt mit spitz zulaufenden Enden zu versehen. Eine entsprechende Gestaltung ist in Fig. 5 durch gestrichelte Linien angedeutet, die einem Querschnitt eines alternativen Grundkörpers 20' eines abgewandeten Reinigungskörpers 16' zugeordnet sind.

Gemäß einer weiteren Ausgestaltung kann der Grundkörper 20, 20' des Reinigungskörpers 16, 16' zumindest einen flügelartigen Fortsatz aufweisen, der im Querschnitt eine Haupterstreckungsrichtung aufweist, die mit der Haupterstreckungsrichtung des Grundkörpers 20, 20' im Querschnitt zusammenfällt. Mit anderen Worten kann der zumindest eine flügelartige Fortsatz etwa als zusätzlicher seitlicher Rand am Grundkörper 20, 20' des Reinigungskörpers ausgebildet sein. Der flügelartige Fortsatz kann insbesondere in Bereichen des Grundkörpers 20, 20' ausgebildet sein, die dem Stiel 12 abgewandt sind. Auch der flügelartige Fortsatz kann eine Oberfläche aufweisen, die zumindest abschnittsweise mit erhabenen Reinigungselementen versehen sein kann, etwa mit Noppen oder dergleichen. Vorzugsweise sind der Grundkörper 20, 20' und der sich davon ausgehend erstreckende zumindest eine flügelartige Fortsatz einstückig ausgebildet und bilden gemeinsam den Reinigungskörper 16. Der zumindest eine flügelartige Fortsatz kann auch als Reinigungslippe ausgebildet sein, die eine mittlere Materialstärke von etwa 0,3 mm bis maximal 1,0 mm aufweist. Die Reinigungslippe kann an ihrem Rand spitz auslaufen.

Es versteht sich, dass der Reinigungskörper 16 alternativ auch eine abgewandelte Form aufweisen kann. Insbesondere kann der Reinigungskörper 16 beispielhaft zungenartig, schnabelartig, becherartig oder ähnlich gestaltet sein. Der Reinigungskörper 16 kann eine längliche Form aufweisen, deren Längserstreckung etwa als Fortsetzung des Stiels 12 erfolgen kann. Quer zu seiner Längserstreckung kann der Reinigungskörper 16 Querschnitte aufweisen, die sich insbesondere in Richtung auf ein dem Griffabschnitt 14 abgewandtes Ende des Reinigungskörpers 16 verjüngen können. Die Querschnitte können beispielhaft grundsätzlich elliptisch, zumindest teilweise rund, ebenso jedoch auch eckig, etwa als Dreieck, Viereck oder N-Eck mit oder ohne abgerundeten Ecken gestaltet sein. Es ist bevorzugt, wenn die Querschnitte zwei Haupterstreckungsrichtungen aufweisen, von denen eine deutlich größer als die andere ist. Auf diese Weise kann sich die flache Gestaltung des Grundkörpers 20 ergeben.

Zumindest der Stiel 12 oder der Reinigungskörper 16 können zumindest partiell mit einer antimikrobiell wirksamen Substanz versehen sein. Diese kann etwa einem Grundmaterial beigemischt sein oder als Bestandteil einer Beschichtung auf äußere Flächen des Stiels 12 oder des Reinigungskörpers 16 appliziert sein. Der Stiel 12 und der Reinigungskörper 16 können grundsätzlich aus einem Kunststoff bestehen. Es kann sich dabei bei dem Stiel 12 und bei dem Reinigungskörper 16 um den gleichen Kunststoff oder aber um verschiedene Kunststoffe handeln. So kann etwa der Stiel 12 im Wesentlichen aus einem Polypropylen bestehen. Der Reinigungskörper 16 kann etwa im Wesentlichen aus einem Polyethylen bestehen. Die Kunststoffe können faserverstärkt, insbesondere glasfaserverstärkt sein.

Gemäß einer Ausgestaltung besteht der Stiel aus einem Polypropylen, das mit einer silberhaltigen antimikrobiell wirksamen Substanz versehen ist. Die antimikrobiell wirksame Substanz kann etwa zu geringen Bestandteilen beigemischt sein. Bei dem Werkstoff für den Stiel 12 kann es sich insbesondere um ein antimikrobiell wirksames Polypropylen handeln, das etwa unter dem Handelsnamen "Tecacomp PP AM" vertrieben wird.

Der Reinigungskörper 16 kann etwa aus einem Polyethylen oder einem ähnlichen hinreichend flexiblen Kunststoff bestehen. Auch dieser Kunststoff kann mittels Fasern, insbesondere mittels Glasfasern verstärkt sein. Vorzugsweise ist der Kunststoff mit zumindest einer antimikrobiell wirksamen Substanz versehen. Gemäß einer Ausgestaltung kann es sich bei der antimikrobiell wirksamen Substanz etwa um eine silberhaltige Substanz handeln, die bspw. unter dem Namen "Ultra-Fresh CA-16" vertrieben wird. Derartige oder ähnliche Substanzen können einem Trägermaterial beigemischt werden, oder als Bestandteil einer Beschichtung auf das Trägermaterial aufgebracht werden.

Antimikrobiell wirksame Kunststoffe können trotz der für deren antimikrobielle Wirkung verantwortlichen Beimengung von antimikrobiell wirksamen Substanzen allgemein analog zu üblichen bekannten Kunststoffen verarbeitet werden. Auf diese Weise kann eine einfache Fertigung erfolgen, etwa mittels Spritzgießen.

Sowohl der Stiel 12 als auch der Reinigungskörper 16 können mit einer antimikrobiell wirksamen Substanz versehen sein. Auf diese Weise kann eine mikrobielle Kontamination sowohl des Reinigungskörpers 16 als auch des Stiels 12 verringert oder gar nahezu vollständig vermieden werden. Es versteht sich, dass insbesondere der Stiel 12 nicht vollständig mit der antimikrobiell wirksamen Substanz versehen sein muss. So ist es denkbar, die antimikrobiell wirksame Substanz vorrangig in Bereiche des Stiels 12 einzubringen, die sich unmittelbar an den Reinigungskörper 16 anschließen.

In einer besonderen Ausgestaltung ist die antimikrobiell wirksame Substanz in eine Trägermatrix eingebunden. Dabei kann es sich etwa um einen Zeolith handeln, der gewissermaßen als Depot fungieren kann. Ein Zeolith eignete sich insbesondere zur Aufnahme von silberhaltigen antimikrobiell wirksamen Substanzen. Ein Zeolith kann Silberionen aufnehmen und über einen längeren Zeitraum definiert abgeben. Auf diese Weise kann die antimikrobielle Wirkung über lange Zeit erhalten bleiben.

Fig. 6 zeigt ein Reinigungsgerät 10a, das gegenüber dem Reinigungsgerät 10 etwa gemäß Fig. 3 abgewandelt sein kann. Der Reinigungskörper 16 des Reinigungsgeräts 10a kann eine äußere Gestaltung aufweisen, die grundsätzlich der Gestaltung des Reinigungskörpers 16 gemäß den Figuren 2 oder 3 entsprechen kann.

Das in Fig. 6 gezeigte Reinigungsgerät 10a ist beispielhaft mit einem Griffabschnitt 14 versehen, der einen Handgriff 30 aufweist. Der Handgriff 30 kann beispielhaft eine ausgebauchte Gestaltung aufweisen. Am Handgriff 30 können weitere Gestaltelemente vorgesehen sein, um ein Ergreifen und Fassen durch den Benutzer zu vereinfachen. Der Handgriff 30 kann ferner zumindest ein Halteelement 32 umfassen, das ein Abrutschen verhindern kann. Auf diese Weise kann der Benutzer beim Reinigungsvorgang höhere Kräfte auf das Reinigungsgerät 10 und den Reinigungskörper 16 aufbringen. Insbesondere kann der Handgriff 30 zwei voneinander beabstandete Halteelemente 32 aufweisen und dazwischen zur Aufnahme durch eine Hand des Benutzers gestaltet sein.

Auch beim Reinigungskörper 16 in Fig. 6 ist aus Veranschaulichungsgründen auf eine Darstellung einzelner Reinigungselemente 24 (vgl. Fig. 2) verzichtet worden.

Der Reinigungskörper 16 kann beispielhaft als Hohlkörper ausgebildet sein und zumindest einen Hohlraum 34 umfassen. Der Hohlraum 34 kann durch zumindest einen Wandabschnitt 36 nach außen begrenzt sein. Die Gestaltung des Reinigungskörpers 16 als Hohlkörper mit dem Hohlraum 34 und vergleichsweise dünnen Wandabschnitten 36 kann eine höhere Flexibilität des Reinigungskörpers 16 bewirken. Auf diese Weise kann der Reinigungskörper 16 mit relativ geringer Kraft beim Reinigungsvorgang ausgelenkt oder verbogen werden, um sämtliche Geometrieelemente eines Reinigungsobjekts erreichen zu können. Ein mit 38 bezeichneter Pfeil in Fig. 6 veranschaulicht mögliche Auslenkbewegungen des Reinigungskörpers 16, die beim Reinigen durch den Benutzer durch entsprechende Einwirkungen auf den Griffabschnitt 14 bewirkt werden können.

Der Reinigungskörper 16 kann als hohler Reinigungskörper mit einer gleichmäßigen oder ungleichmäßigen Wandstärke beim Wandabschnitt 36 ausgeführt sein. Hohle Bauteile können etwa mittels Blasformen oder vergleichbaren Verfahren hergestellt werden. Zur Fertigung zumindest teilweiser hohler Bauteile können sich ferner Umformverfahren anbieten. Ferner ist es vorstellbar, einen hohlen Reinigungskörper 16 etwa durch Fügen von Einzelteilen, bspw. von Formhälften, herzustellen. Fügeverfahren können insbesondere Kunststoffschweißen umfassen.

Vorzugsweise besteht das Reinigungsgerät 10a im Wesentlichen aus zwei separaten Komponenten, nämlich den Stiel 12 mit dem Griffabschnitt 14 sowie dem Reinigungskörper 16. Auf diese Weise kann das Reinigungsgerät 10a einen besonders einfachen Aufbau aufweisen. Es ist grundsätzlich vorstellbar, das Reinigungsgerät 10a lediglich einstückig auszuführen. Gleichwohl stellt eine zweistückige Ausgestaltung einen guten Kompromiss zwischen dem Fertigungsaufwand und möglicher Gestaltungsfreiheit beim Entwurf der Komponenten dar.

Beispielhaft kann der Stiel 12 zumindest partiell mit einer Oberflächenbeschichtung 40 versehen sein, die antimikrobiell wirksame Bestandteile aufweist. Beispielhaft kann der Reinigungskörper 16 zumindest partiell mit einer Oberflächenbeschichtung 41 versehen sein, die antimikrobiell wirksame Bestandteile aufweist. Diese Gestaltungen können eine geeignete Alternative zu den Gestaltungen darstellen, bei denen antimikrobiell wirksame Substanzen einem Trägermaterial, also etwa einem Trägerkunststoff, beigemischt sind.

Fig. 7 zeigt eine Teildarstellung eines Reinigungsobjekts 42. Beim Reinigungsobjekt 42 kann es sich insbesondere um ein Spülbecken oder eine Spülschüssel einer Toilette handeln. Dabei kann es sich etwa um einen Körper aus Steingut oder Porzellan handeln. Es sind jedoch auch Spülbecken aus metallischen Werkstoffen oder aus Kunststoffwerkstoffen bekannt. Das Reinigungsobjekt 42 weist beispielhaft einen Wandkörper 44 auf, der in einen (oberen) Randbereich in einer etwa U-förmigen Kröpfung 46 mündet. Durch die Gestaltung der Kröpfung 46 kann sich ein Zwischenraum bilden, der für Reinigungsbürsten oder ähnliche bekannte Reinigungsgeräte nur schwer erreichbar ist. Bei einer üblichen Gestaltung wird das Reinigungsgerät beim Reinigungsvorgang zunächst von oben zugeführt, vgl. einen mit 47 bezeichneten Pfeil. Es wäre von Vorteil, wenn das Reinigungsgerät dazu ausgebildet ist, ausgelenkt oder verbogen werden zu können, um zumindest teilweise entgegen seiner ursprünglichen Einführrichtung in den durch die Kröpfung 46 bedingten Zwischenraum eingreifen zu können. Eine derartige Bewegung ist durch einen mit 48 bezeichneten gestrichelten Pfeil veranschaulicht. Umgangssprachlich ist davon die Rede, eine Toilettenschüssel "bis unter den Rand" zu reinigen.

Die hinreichend flexible Gestaltung des Reinigungskörpers 16 des Reinigungsgeräts 10 erlaubt es, diesen auszulenken bzw. umzulenken, um den Zwischenraum und weitere schlecht zugängliche Stellen des Reinigungsobjekts 42 reinigen zu können. Mit relativ geringem Kraftaufwand kann der Reinigungskörper 16 gebogen bzw. geknickt werden, vgl. den Pfeil 38 in Fig. 6. Dies kann etwa durch "Andrücken" des Reinigungsgerätes 10 an einem konkav gestalteten Innenbereich des Wandkörpers 44 erfolgen. Auf diese Weise kann das Reinigungsobjekt 42 auch hinter der Kröpfung 46 gereinigt werden, obwohl dieser Bereich aus Sicht entlang einer üblichen Zuführrichtung (vgl. den Pfeil 47) hinterschnittig ist.

Fig. 8 veranschaulicht in einfacher Weise, dass der Stiel 12 und der Reinigungskörper 16 etwa bei einem Reinigungsgerät 10b formschlüssig miteinander gefügt sein können. Zu diesem Zweck sind etwa am Befestigungsabschnitt 18 des Stiels 12 zumindest ein erster Kragen 50 oder ein zweiter Kragen 52 ausgebildet. Zwischen den Kragen 50 und 52 kann ein Formschlusselement 54 ausgebildet sein. Dabei kann es sich etwa um einen Vierkant, ein sternförmiges Gestaltelement oder Ähnliches handeln. Allgemein können die Kragen 50, 52 zumindest teilweise über das Formschlusselement 54 seitlich (radial) vorspringen. Auf diese Weise kann sich ein Hinterschnitt ergeben. In diesen Hinterschnitt kann etwa die Basis 21 des Reinigungskörpers 16 eingreifen. Auf diese Weise kann ein Lösen des Reinigungskörpers 16 vom Stiel 12 unterbunden werden.

Das Formschlusselement 54 kann derartig an eine Öffnung 56 in der Basis 21 des Reinigungskörpers 16 angepasst sein, dass ein Verdrehen oder eine sonstige Relativbewegung zwischen dem Stiel 12 und der Basis 21 des Reinigungskörpers 16 unterbunden ist. Auf diese Weise kann sich für den Benutzer beim Führen des Reinigungsgeräts 10b eine hohe Führungsgenauigkeit ergeben.

Die in Fig. 8 dargestellte Verbindung zwischen dem Stiel 12 und dem Reinigungskörper 16 kann etwa durch Hinterspritzen bzw. Umspritzen hergestellt werden. Hierzu ist es vorstellbar, zunächst den Stiel 12 mitsamt des Befestigungsabschnitts 18 herzustellen. Anschließend kann der Stiel 12 mit dem Befestigungsabschnitt 18 in geeigneter Weise in eine Form für den Reinigungskörper 16 eingebracht werden. Bei der Fertigung des Reinigungskörpers 16 kann dieser unmittelbar mit seiner Basis 21 in dem Befestigungsabschnitt 18 eingreifen, um die formschlüssige Verbindung zu sichern.

## Patentansprüche

1. Borstenloses Reinigungsgerät, insbesondere WC-Reinigungsgerät, mit einem Stiel (12) mit einem Griffabschnitt (14), mit einem zumindest teilweise flexiblen Reinigungskörper (16), der an einem dem Griffabschnitt (14) abgewandten Ende des Stiels (12) angebracht ist, wobei der Reinigungskörper (16) an seiner Oberfläche (22) zumindest partiell mit einer Mehrzahl von erhabenen Reinigungselementen (24) versehen ist, wobei zumindest der Reinigungskörper (16) mit einer antimikrobiell wirksamen Substanz versehen ist, wobei der Reinigungskörper (16) aus einem elastischen Kunststoff gebildet ist, wobei der Reinigungskörper (16) einen zungenartigen Grundkörper (20) aufweist, der sich ausgehend von einer mit dem Stiel (12) gekoppelten Basis (21) erstreckt, wobei an einer Oberfläche des Grundkörpers (20) eine Mehrzahl der Reinigungselemente (24) ausgebildet ist, wobei die Reinigungselemente (24) als integrale Bestandteile des Reinigungskörpers (16) und von dessen Grundkörper (20) gestaltet sind, **dadurch gekennzeichnet, dass** die antimikrobiell wirksame Substanz dem Kunststoff beigemischt ist, und dass der Grundkörper (20) eine Haupterstreckungsrichtung aufweist, die mit einer Haupterstreckungsrichtung des Stiels (12) zusammenfällt.

2. Reinigungsgerät (10) nach Anspruch 1, wobei die antimikrobiell wirksame Substanz einem Trägermaterial des Reinigungsgerätes (10) beigemischt ist.

3. Reinigungsgerät (10) nach einem der vorhergehenden Ansprüche, wobei der Stiel (12) mit einer antimikrobiell wirksamen Substanz versehen ist, wobei der Stiel (12) aus einem Kunststoff gebildet ist, und wobei die antimikrobiell wirksame Substanz zumindest partiell dem Kunststoff beigemischt oder als Bestandteil einer Beschichtung auf den Kunststoff appliziert ist.

4. Reinigungsgerät (10) nach einem der vorhergehenden Ansprüche, wobei die antimikrobiell wirksame Substanz silberhaltige Bestandteile enthält, die insbesondere kolloidales Silber aufweisen und vorzugsweise zur Abgabe von Silberionen ausgebildet sind.

5. Reinigungsgerät (10) nach einem der vorhergehenden Ansprüche, wobei die antimikrobiell wirksame Substanz kupferhaltige Bestandteile enthält, die vorzugsweise zur Abgabe von Kupferionen ausgebildet sind.

6. Reinigungsgerät (10) nach einem der vorhergehenden Ansprüche, wobei die antimikrobiell wirksame Substanz polychlorierte Phenoxyphenole enthält.

7. Reinigungsgerät (10) nach einem der vorhergehenden Ansprüche, wobei der Reinigungskörper (16) zumindest abschnittsweise mit antimikrobiell wirksamen Viskosefasern versehen ist, insbesondere mit Viskosefasern auf Basis von Zellstoffen, die aus Bambus oder Buche gewonnen sind.

8. Reinigungsgerät (10) nach einem der vorhergehenden Ansprüche, wobei die antimikrobiell wirksame Substanz in eine Trägermatrix eingebunden ist, die Zeolithe enthält, wobei die antimikrobiell wirksame Substanz vorzugsweise in kalziniertes synthetisches Zeolith eingebunden ist.

9. Reinigungsgerät (10) nach einem der vorhergehenden Ansprüche, wobei zumindest der Stiel (12) oder der Reinigungskörper (16) im Wesentlichen aus einem Polyolefinwerkstoff, insbesondere einem Polyethylen oder einem Polypropylen bestehen.

10. Reinigungsgerät (10) nach einem der vorhergehenden Ansprüche, wobei der Reinigungskörper (16) zumindest abschnittsweise aus einem silikonartigen Trägermaterial besteht, wobei die antimikrobiell wirksame Substanz vorzugsweise in das silikonartige Trägermaterial eingebunden ist.

11. Reinigungsgerät (10) nach einem der vorhergehenden Ansprüche, wobei der Reinigungskörper (16) zumindest abschnittsweise eine borstenlose genoppte Oberfläche (22) aufweist, die mit Reinigungselementen (24) in Form von erhabenen Noppen versehen ist, die insbesondere in ihrer Erstreckungsrichtung einen runden Querschnitt aufweisen.

12. Reinigungsgerät (10) nach einem der vorhergehenden Ansprüche, wobei der Reinigungskörper (16) an seiner Oberfläche (22) eine strukturierte Anordnung von Reinigungselementen (24) aufweist, die insbesondere gereiht oder versetzt zueinander angeordnet sind.

13. Reinigungsgerät (10) nach einem der vorhergehenden Ansprüche, wobei der Reinigungskörper (16) einen Grundkörper (20) mit im Wesentlichen halbellipsoidförmiger Gestaltung aufweist.

14. Reinigungsgerät (10) nach einem der vorhergehenden Ansprüche, wobei der Reinigungskörper (16) zumindest einen Hohlraum (34) aufweist, der durch zumindest einen Wandabschnitt (36) begrenzt ist.

15. Reinigungsgerät (10) nach einem der vorhergehenden Ansprüche, wobei der Stiel (12) und der Reinigungskörper (16) formschlüssig miteinander gekoppelt sind.

## Claims

1. Bristle-less cleaning implement, particularly toilet cleaning implement, comprising a handle (12) having a grip portion (14), and an at least partially flexible cleaning body (16) that is attached to the handle (12) at an end thereof facing away from the grip portion (14), wherein the cleaning body (16) is provided, at least partially on its surface (22), with a plurality of elevated cleaning elements (24), wherein at least the cleaning body (16) is provided with an antimicrobially effective substance, wherein the cleaning body (16) is formed from an elastic plastic material, wherein the cleaning body (16) comprises a tongue-like base body (20) extending from a bottom (21) that is coupled to the handle (12), wherein at a surface of the base body (20) a plurality of the cleaning elements (24) is formed, wherein the cleaning elements (24) are formed as integral components of the cleaning body (16) and of the base body (20) thereof, **characterized in that** the antimicrobially effective substance is admixed to the plastic material, and **in that** the base body (20) comprises a main extension direction that coincides with a main extension direction of the handle (12).

2. Cleaning implement (10) according to claim 1, wherein the antimicrobially effective substance is admixed to a support material of the cleaning implement (10).

3. Cleaning implement (10) according to any of the preceding claims, wherein the handle (12) is provided with an antimicrobially effective substance, wherein the handle (12) is formed from plastic material, and wherein the antimicrobially effective substance is at least partially admixed to the plastic material or applied as a component of a coating to the plastic material.

4. Cleaning implement (10) according to any of the preceding claims, wherein the antimicrobially effective substance comprises silver-containing components that particularly comprise colloidal silver and that are preferably arranged to emit silver ions.

5. Cleaning implement (10) according to any of the preceding claims, wherein the antimicrobially effective substance comprises copper-containing components that are preferably arranged to emit copper ions.

6. Cleaning implement (10) according to any of the preceding claims, wherein the antimicrobially effective substance comprises polychlorinated phenoxy phenols.

7. Cleaning implement (10) according to any of the preceding claims, wherein the cleaning body (16) is at least partially provided with antimicrobially effective viscose fibers, particularly with viscose fibers that are based on wood pulp that is obtained from bamboo or beech wood.

8. Cleaning implement (10) according to any of the preceding claims, wherein the antimicrobially effective substance is embedded in a carrier matrix that comprises zeolites, wherein the antimicrobially effective substance is preferably embedded in calcinated synthetic zeolite.

9. Cleaning implement (10) according to any of the preceding claims, wherein at least the handle (12) or the cleaning body (16) are substantially formed from a polyolefin material, particularly from polyethylene or from polypropylene.

10. Cleaning implement (10) according to any of the preceding claims, wherein the cleaning body (16) is at least sectionally composed of a silicone-like support material, wherein the antimicrobially effective substance is preferably embedded in the silicone-like support material.

11. Cleaning implement (10) according to any of the preceding claims, wherein the cleaning body (16) at least sectionally comprises a bristle-less nubby surface (22) that is provided with cleaning elements (24) that are arranged as elevated knobs that particularly comprise a round profile in their extension direction.

12. Cleaning implement (10) according to any of the preceding claims, wherein the cleaning body (16) comprises on its surface (22) a structured arrangement of cleaning elements (24) that are particularly arranged in rows or in a fashion staggered to each other.

13. Cleaning implement (10) according to any of the preceding claims, wherein the cleaning body (16) comprises a base body (20) comprising a substantially half-ellipsoid shape.

14. Cleaning implement (10) according to any of the preceding claims, wherein the cleaning body (16) comprises at least one cavity (34) that is delimited by at least one wall portion (36).

15. Cleaning implement (10) according to any of the preceding claims, wherein the handle (12) and the cleaning body (16) are coupled to each other in a positive-locking fashion.

## Revendications

1. Appareil de nettoyage sans soies, notamment appareil de nettoyage de WC, avec un manche (12) avec une section de poignée (14), avec un corps de nettoyage (16) au moins en partie flexible disposé au niveau d'une extrémité du manche (12) opposée à la section de poignée (14), le corps de nettoyage (16) étant pourvu au niveau de sa surface (22) au moins en partie d'une pluralité d'éléments de nettoyage (24) en relief, au moins le corps de nettoyage (16) étant pourvu d'une substance à action antimicrobienne, le corps de nettoyage (16) étant formé d'une matière plastique élastique, le corps de nettoyage (16) comportant un corps de base (20) de type languette s'étendant à partir d'une base (21) couplée au manche (12), une pluralité d'éléments de nettoyage (24) étant réalisée au niveau d'une surface du corps de base (20), les éléments de nettoyage (24) étant réalisés sous la forme de composants faisant partie intégrante du corps de nettoyage (16) et sont réalisés à partir de son corps de base (20) de façon à ce que la substance à action antimicrobienne soit mélangée à la matière plastique et que le corps de base (20) présente une direction d'extension principale coïncidant avec une direction d'extension principale du manche (12).

2. Appareil de nettoyage (10) selon la revendication 1, la substance à action antimicrobienne étant mélangée avec un matériau porteur de l'appareil de nettoyage (10).

3. Appareil de nettoyage (10) selon l'une quelconque des revendications précédentes, le manche (12) étant pourvu d'une substance à action antimicrobienne, le manche (12) étant formé d'une matière plastique et la substance à action antimicrobienne étant mélangée au moins partiellement à la matière plastique ou étant appliquée sous la forme d'un composant d'un revêtement sur la matière plastique.

4. Appareil de nettoyage (10) selon l'une quelconque des revendications précédentes, la substance à action antimicrobienne contenant des composants argentifères comportant notamment de l'argent colloïdal et de préférence réalisés pour rendre des ions d'argent.

5. Appareil de nettoyage (10) selon l'une quelconque des revendications précédentes, la substance à action antimicrobienne contenant des composants cuprifères de préférence réalisés pour rendre des ions de cuivre.

6. Appareil de nettoyage (10) selon l'une quelconque des revendications précédentes, la substance à action antimicrobienne contenant des phénoxyphénols polychlorés.

7. Appareil de nettoyage (10) selon l'une quelconque des revendications précédentes, le corps de nettoyage (16) étant pourvu au moins en partie de fibres de viscose à action antimicrobienne, notamment de fibres de viscose à base de celluloses réalisées à partir de bambou ou de hêtre.

8. Appareil de nettoyage (10) selon l'une quelconque des revendications précédentes, la substance à action antimicrobienne étant enrobée dans une matrice de support contenant des zéolithes, la substance à action antimicrobienne étant de préférence enrobée dans de la zéolithe synthétique calcinée.

9. Appareil de nettoyage (10) selon l'une quelconque des revendications précédentes, au moins le manche (12) ou le corps de nettoyage (16) se composant pour l'essentiel d'une matière polyoléfine, notamment d'un polyéthylène ou d'un polypropylène.

10. Appareil de nettoyage (10) selon l'une quelconque des revendications précédentes, le corps de nettoyage (16) se composant au moins en partie d'un matériau porteur de type silicone, la substance à action antimicrobienne étant de préférence enrobée dans le matériau porteur de type silicone.

11. Appareil de nettoyage (10) selon l'une quelconque des revendications précédentes, le corps de nettoyage (16) comportant au moins en partie une surface (22) à picots sans soies pourvue d'éléments de nettoyage (24) sous la forme de picots en relief présentant notamment dans leur direction d'extension une section transversale ronde.

12. Appareil de nettoyage (10) selon l'une quelconque des revendications précédentes, le corps de nettoyage (16) comportant au niveau de sa surface (22) un agencement structuré d'éléments de nettoyage (24) notamment disposés en ligne ou de façon décalée les uns par rapport aux autres.

13. Appareil de nettoyage (10) selon l'une quelconque des revendications précédentes, le corps de nettoyage (16) comportant un corps de base (20) avec une forme pour l'essentiel en forme hémi-ellipsoïdale.

14. Appareil de nettoyage (10) selon l'une quelconque des revendications précédentes, le corps de nettoyage (16) comportant au moins une chambre creuse (34) délimitée par au moins une section de paroi (36).

15. Appareil de nettoyage (10) selon l'une quelconque des revendications précédentes, le manche (12) et le corps de nettoyage (16) étant couplés entre eux par complémentarité de formes.
